(19) Europäisches Patentamt
European Patent Office
Office européen des brevets

(11) **EP 4 484 525 A1**

(12) **EUROPEAN PATENT APPLICATION**
published in accordance with Art. 153(4) EPC

(43) Date of publication:
**01.01.2025 Bulletin 2025/01**

(51) International Patent Classification (IPC):
*C10G 9/24* (2006.01)    *C10G 9/16* (2006.01)

(21) Application number: 23760377.4

(22) Date of filing: **22.02.2023**

(86) International application number:
**PCT/KR2023/002541**

(87) International publication number:
**WO 2023/163503 (31.08.2023 Gazette 2023/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.02.2022 KR 20220023601**

(71) Applicant: **LG Chem, Ltd.**
**Yeongdeungpo-gu**
**Seoul 07336 (KR)**

(72) Inventors:
• **CHOI, Jun Won**
  **Daejeon 34122 (KR)**
• **KIM, Min Jun**
  **Daejeon 34122 (KR)**
• **IM, Ye Hoon**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **FLUID HEATING APPARATUS**

(57)    A fluid heating device capable of reducing the amount of the generated greenhouse gases while improving the yield of target compounds (ethylene, propylene and hydrogen, etc.) in a cracking process by controlling inflow heat fluxes themselves, respectively, in accordance with the progress degree of pyrolysis. The fluid heating device reduces a phenomenon that coke is generated by controlling inflow heat fluxes themselves, respectively, in accordance with the progress degree of pyrolysis in consideration of physical and/or chemical characteristics of various targets of pyrolysis, and reducing the amount of production of compounds (methane, ethane, benzene and fuel oil, etc.) other than the target compounds. A method of using the fluid heating device is also provided.

[Figure 11]

EP 4 484 525 A1

# EP 4 484 525 A1

**Description**

CROSS-REFERENCE TO RELATED APPLICATIONS

The present application is a national phase entry under 35 U.S.C. § 371 of International Application No. PCT/KR2023/002541 filed February 22, 2023, which claims priority to Korean Patent Application No. 10-2022-0023601, filed on February 23, 2022, the disclosures of which are incorporated herein by reference in their entirety.

TECHNICAL FIELD

The present application relates to a fluid heating device and an application thereof.

BACKGROUND ART

Ethylene, propylene and/or butadiene, and the like, are olefins that are basic raw materials of petrochemicals, and these olefins can be prepared by diluting naphtha obtained by refining crude oil and/or various hydrocarbon raw materials (e.g., ethane, propane and/or biodiesel, etc.) with steam, and performing cracking through pyrolysis in a high-temperature cracking furnace.

The cracking furnace for performing the pyrolysis may typically comprise a radiation part, a convection part, and a steam generator. Naphtha or the like, which is a target for pyrolysis, is primary preheated in a preheater while being transported through a flow line, is secondarily preheated in the convection part to partially evaporate, and is mixed with steam and introduced into the radiation part, whereby the pyrolysis is performed by high-temperature heat.

The radiation part of the cracking furnace is a position where the pyrolysis target transferred through the flow line receives thermal energy and the pyrolysis reaction is performed. When the pyrolysis is performed in a conventional high-temperature cracking furnace, heat has been transferred based on the entire flow line in order to process a large amount of pyrolysis targets at once due to the nature of the large equipment industry, and the heat transfer has been achieved by firepower generated by burning fuels. The heat transfer by firepower is advantageous from the viewpoint of being able to economically process a large amount of pyrolysis targets at once, but it is difficult to control the aspect of inflow heat in accordance with the progress degree of pyrolysis, whereby an inefficient pyrolysis is performed.

If a heat distribution pattern can be adjusted along the flow line, efficient pyrolysis of the pyrolysis target is possible. However, in the conventional high-temperature cracking furnace in which pyrolysis is performed in the high-temperature cracking furnace using the firepower, the aspect of heat generated by the firepower is fixed. In addition, for adjusting a part in the aspect of heat or changing the aspect of heat, it is necessary to finely adjust the firepower, but it is very difficult to finely control the firepower in the large-scale equipment industry, and if the intensity of the firepower is changed to control the aspect of heat, the more inefficient pyrolysis may also be performed.

Therefore, in the conventional high-temperature cracking furnace, the same firepower is continuously applied thereto, and for this reason, when the aspect of heat is once formed, this aspect is fixed, so that in a specific part, the heat can be introduced more or less than the required amount. In this case, side reactions of the pyrolysis targets are activated, and the side reactions increase, so that coke may be generated.

The coke is accumulated inside a flow line to increase the temperature of the wall surface of the flow line. Due to the accumulated coke, the diameter of the flow line is reduced and the differential pressure is increased, thereby reducing the operating cycle. The increase of the wall surface temperature and/or operating cycle reduction results in inefficiency of pyrolysis.

Also, in the case of performing pyrolysis in the conventional high-temperature cracking furnace, it is difficult to control the heat, as described above, so that when the pyrolysis target is changed, there is a problem that cannot be flexibly coped with.

Therefore, considering the physical and/or chemical characteristics of the pyrolysis target, a fluid heating device is required, in which all the inflow heat fluxes in accordance with the progress degree of the pyrolysis are each controlled to have uniform profiles while controlling the inflow heat fluxes themselves in accordance with the progress degree of the pyrolysis.

[Prior Art Documents]

[Patent Documents]

(Patent Document 1) Japanese Unexamined Patent Publication No. 2016-150968

TECHNICAL PROBLEM

The present application is intended to provide a fluid heating device capable of improving the yield of target compounds (ethylene, propylene and/or hydrogen, etc.) in a cracking process by controlling heat fluxes according to the type of pyrolysis, and a use thereof.

The present application is intended to provide a fluid heating device capable of suppressing or reducing the occurrence of unnecessary by-products such as coke, or side reactions by controlling heat fluxes in consideration of the physical and/or chemical characteristics of various pyrolysis targets, and a use thereof.

The present application is intended to provide a fluid heating device capable of reducing generated amounts of compounds (methane, ethane, benzene, fuel oil, etc.) other than the target compounds, and a use thereof.

The present application is intended to provide a fluid heating device capable of reducing the generated amount of greenhouse gases, and a use thereof.

TECHNICAL SOLUTION

The present application relates to a fluid heating device.

The fluid heating device may comprise a pipeline having an internal passage through which the fluid may flow, where the internal passage may be divided into two or more heat absorbing regions.

The two or more divided heat absorbing regions may be regions each independently formed to be capable of receiving thermal energy.

The thermal energy may heat the fluid flowing in the internal passage or be absorbed by the fluid. For example, the fluid may absorb thermal energy in a state of no or little temperature increase.

The thermal energy received by the respective heat absorbing regions may be generated in different heat generating units.

At least one heat generating unit among the heat generating units may be a unit (electrical heat generating unit) formed to be capable of converting electrical energy into thermal energy.

In one example, among all heat generating units provided in the fluid heating device of the present application, a certain level or more may be electrical heat generating units. For example, the lower limit of the ratio of the number of electrical heat generating units among all the heat generating units provided in the fluid heating device may be 50%, 55%, 60%, 65%, 70%, 75%, 80%, 85%, 90% or 95% or so, and the upper limit may be 100% or so. The ratio of the number of electrical heat generating units may be less than or equal to the above-described upper limit while being more than or equal to, or more than the above-described lower limits.

The electrical heat generating unit may be formed to receive electrical energy through a direct current or an alternating current.

Here, the electrical heat generating unit may be a pipeline formed to generate resistance heat by energization. The direct current or alternating current may be applied to the pipeline to generate the resistance heat.

Here, the electrical heat generating unit may be an external heat source provided while being spaced apart from the pipeline. The external heat source may be an electrical heat generating unit formed to convert electrical energy into thermal energy.

Here, the electrical heat generating unit may be a pipeline in which resistance heat is generated by generating an induced current.

The induced current may be one generated by applying an alternating current to a coil wire provided while surrounding the pipeline in a spiral shape and being spaced apart from each other.

The two or more heat absorbing regions of the fluid heating device may be arranged such that the fluid can pass through the heat absorbing regions where the absolute value of the deviation ΔH of the applied thermal energy according to the following equation 1 is 10% or more:

$$[\text{Equation 1}]$$

$$\Delta H = 100\% \times (H1 - H2)/H2$$

In Equation 1, H1 is the thermal energy applied to any one of the two or more heat absorbing regions, and H2 is the thermal energy applied to the heat absorbing region different from the heat absorbing region to which the thermal energy of H1 is applied.

Here, the two or more heat absorbing regions may be arranged such that the thermal energy applied along the direction of the fluid flow decreases and then increases, or increases and then decreases.

The two or more heat absorbing regions of the fluid heating device may be arranged such that the fluid may pass through the heat absorbing regions where the absolute value of the deviation ΔF of heat flux according to the following equation 2 is 10% or more.

[Equation 2]

$$\Delta F = 100\% \times (F1 - F2)/F2$$

In Equation 2, F1 is the heat flux of any one of the two or more heat absorbing regions, and F2 is the heat flux of the heat absorbing region different from the heat absorbing region with the heat flux of F1 above.

Here, the heat absorbing regions may be arranged so that the fluid may be exposed to a heat flux that decreases and then increases or a heat flux that increases and then decreases, along the direction of the fluid flow.

The heat absorbing region may be arranged such that the fluid may be exposed to periodic fluctuations in the heat flux or applied thermal energy in the internal passage while moving along the direction of the fluid flow.

Here, the absolute value of the deviation between the maximum heat flux or maximum applied thermal energy and the minimum heat flux or minimum applied thermal energy in one cycle of periodic fluctuations may be adjusted within a predetermined range.

Here, the two or more heat absorbing regions may be arranged such that the fluid is exposed to periodic fluctuations of the heat flux or applied thermal energy comprising two or more cycles.

Here, the two or more heat absorbing regions may be arranged such that the ratio of the length of one cycle of the periodic fluctuations of the heat flux or applied thermal energy to the length of the pipeline through which the fluid moves is in a range of 1% to 200%.

The present application may also be a method for producing a product by heating a fluid using the fluid heating device. Here, the product may be, for example, ethylene, propylene and/or hydrogen, and the like.

The method may comprise a step of independently applying thermal energy to the two or more divided heat absorbing regions of the fluid heating device while moving the fluid into the internal passage of the pipeline of the fluid heating device.

Here, the thermal energy applied to each heat absorbing region may be generated by different heat generating units.

Here, at least one heat generating unit of the heat generating units present in the fluid heating device may be an electrical heat generating unit.

In one example, among all heat generating units provided in the fluid heating device of the present application, a certain level or more may be the electrical heat generating unit. For example, the lower limit of the ratio of the number of electrical heat generating units among all the heat generating units provided in the fluid heating device may be 50%, 55%, 60%, 65%, 70%, 75%, 80%, 85%, 90% or 95% or so, and the upper limit may be 100% or so. The ratio of the number of electrical heat generating units may be less than or equal to the above-described upper limit while being more than or equal to, or more than any one of the above-described lower limits.

Here, the heat generating unit may be a device receiving electrical energy through a direct current or an alternating current.

Here, at least one heat generating unit may be a pipeline generating resistance heat by energization, where the pipeline may be one generating the resistance heat by applying the direct current or alternating current thereto.

Here, at least one heat generating unit may be an external heat source provided while being spaced apart from the pipeline, where the external heat source may be one converting electrical energy into thermal energy.

Here, at least one heat generating unit may be a pipeline in which resistance heat is generated by generating an induced current, where the induced current may be one generated by applying an alternating current to a coil wire provided while surrounding the pipeline in a spiral shape and being spaced apart from each other.

Here, the fluid may apply thermal energy to two or more heat absorbing regions where the absolute value of the deviation ΔH of the applied thermal energy according to the following equation 1 is 10% or more:

[Equation 1]

$$\Delta H = 100\% \times (H1 - H2)/H2$$

In Equation 1, H1 is the thermal energy applied to any one of the two or more heat absorbing regions, and H2 is the thermal energy applied to the heat absorbing region different from the heat absorbing region to which the thermal energy of H1 is applied.

Here, the two or more heat absorbing regions may be arranged such that the thermal energy applied along the direction of the fluid flow decreases and then increases, or increases and then decreases.

Here, the two or more heat absorbing regions may be arranged such that the fluid may pass through the heat absorbing regions where the absolute value of the deviation ΔF of heat flux according to the following equation 2 is 10% or more.

$$[\text{Equation 2}]$$

$$\Delta F = 100\% \times (F1 - F2)/F2$$

In Equation 2, F1 is the heat flux of any one of the two or more heat absorbing regions, and F2 is the heat flux of the heat absorbing region different from the heat absorbing region with the heat flux of F1 above.

Here, the heat absorbing regions may be arranged such that the fluid may be exposed to a heat flux that decreases and then increases or a heat flux that increases and then decreases, along the direction of the fluid flow.

Here, the thermal energy may be applied to the two or more heat absorbing regions so that the fluid is exposed to periodic fluctuations of the heat flux or applied thermal energy in the internal passage along the direction of the flow.

Here, the thermal energy may be applied to the two or more heat absorbing regions so that the absolute value of the deviation between the maximum heat flux or applied thermal energy and the minimum heat flux or applied thermal energy in one cycle of periodic fluctuations is 10% or more.

Here, the thermal energy may be applied to the two or more heat absorbing regions so that the fluid is exposed to periodic fluctuations of the heat flux or applied thermal energy comprising two or more cycles.

Here, the thermal energy may be applied to the two or more heat absorbing regions so that the ratio of the length of one cycle of periodic fluctuations of the heat flux or applied thermal energy to the length of the pipeline through which the fluid moves is in a range of 1% to 200%.

ADVANTAGEOUS EFFECTS

The present application can provide a fluid heating device capable of improving the yield of target products by freely controlling heat fluxes according to the type of pyrolysis, and a method of using the same.

The present application can provide a fluid heating device capable of reducing or suppressing the occurrence of by-products such as coke, or side reactions by freely controlling heat fluxes in consideration of the physical and/or chemical characteristics of pyrolysis targets, and a method of using the same.

The present application can provide a fluid heating device capable of reducing generated amounts of compounds (methane, ethane, benzene, and fuel oil, etc.) other than target products, and a method of using the same.

The present application can provide a fluid heating device capable of reducing the generated amount of greenhouse gases, and a method of using the same.

BRIEF DESCRIPTION OF DRAWINGS

Figures 1 to 4 are schematic diagrams of exemplary fluid heating devices.
Figures 5 to 8 are schematic diagrams of shapes of exemplary pipelines.
Figure 9 is a schematic diagram of a cross-sectional shape of an exemplary pipeline.
Figure 10 is a schematic diagram of the fluid heating device of Example 1.
Figure 11 is a form of heat fluxes in the pipeline of Example 2.
Figure 12 is a form of heat fluxes in the pipeline of Comparative Example 2.
Figure 13 is analysis results of the reactants of Example 2 and Comparative Example Figure 14 is a form of heat fluxes in the pipeline of Example 3.
Figure 15 is a form of heat fluxes in the pipeline of Comparative Example 3.
Figure 16 is analysis results of the reactants of Example 3 and Comparative Example

DETAILED DESCRIPTION

Among the physical properties mentioned in this specification, when the measurement temperature affects the physical property, the relevant physical property is a physical property measured at room temperature, unless otherwise specified.

In this specification, the term room temperature is a natural temperature without warming or cooling, which may mean, for example, any one temperature within the range of 10°C to 30°C, for example, a temperature of 30°C or less while being about 15°C or more, about 18°C or more, about 20°C or more, about 23°C or more, or about 27 °C or less, or a temperature of 25°C or so. In this specification, unless otherwise specified, the unit of temperature is Celsius (°C).

Among the physical properties mentioned in this specification, when the measurement pressure affects the physical property, the relevant physical property is a physical property measured at normal pressure, unless otherwise specified.

In this specification, the term normal pressure is a pressure in a state where it is not pressurized or depressurized, and may mean, for example, any one pressure within the range of 0.9 atm to 1.2 atm or within the range of about 740 mmHg to 780 mmHg.

In this specification, the term fluid means a material in a gas phase and/or liquid phase. For example, one or more selected from the group consisting of water, steam, air, and hydrocarbon compounds, and the like may be a fluid. The fluid may be cracked by receiving thermal energy as a heating target. The hydrocarbon compounds referred to herein may be a fluid. An example of the hydrocarbon compound includes naphtha, ethane, propane, methane and/or biodiesel, and the like, and in addition to these, there may also be necessary targets according to common sense in the industry. The fluid may further comprise water or steam for cracking due to thermal energy, and a filled catalyst may also be used. Also, in one example, when the fluid includes methane as the hydrocarbon compound, it may also further comprise carbon dioxide for reforming, and the like.

In one example, the fluid heating device disclosed herein may be a part of the predetermined facility. Here, an example of the facility may include, for example, a steam cracker, a reformer and/or an alkane de-hydrogenator, and the like. The fluid heating device according to one example of the present application may perform at least one process in the facility.

In one example, the fluid heating device may be a part of a steam cracker. The steam cracker may be one performing steam cracking. For example, the steam cracker may mean a facility that by applying thermal energy in the presence of steam, hydrocarbons with relatively long carbon chains are converted to hydrocarbons with relatively short carbon chains, or certain hydrocarbons are converted to other hydrocarbons. Here, an example of hydrocarbons to be converted may include naphtha, propane, butane and/or ethane, and the like, and through the steam cracking, hydrogen, methane, ethane, ethylene, propylene and/or butadiene, and the like may be produced.

In one example, the fluid heating device may be a part of a reformer. The reformer may be a facility that steam and/or carbon oxides are produced from natural gas, light gasoline, methanol, biogas and/or biomass. Also, the reformer may be a facility that hydrogen is produced from methane and carbon dioxide.

In one example, the fluid heating device may be a part of an alkane de-hydrogenator. The alkane de-hydrogenator may be a facility for producing alkenes by dehydrogenating alkanes.

Hereinafter, a description will be made with reference to drawings according to an embodiment of the present disclosure, but this is for easier understanding of the fluid heating device and its use, and the fluid heating device and its use are not limited thereto.

A fluid heating device (1) according to one example may comprise a pipeline (10) having an internal passage through which the fluid may flow.

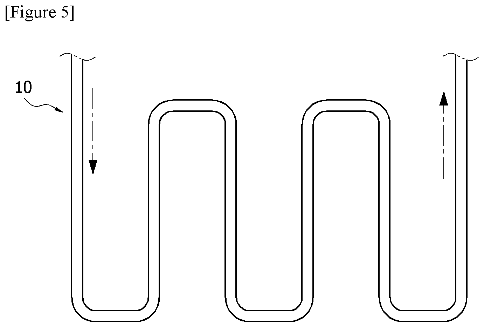

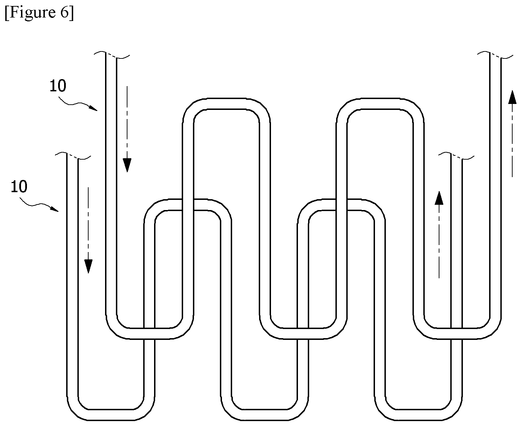

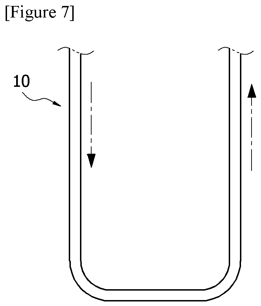

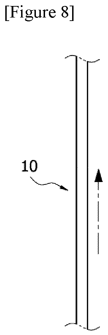

The shape of the pipeline (10) is not particularly limited. The shape of the pipeline (10) may be appropriately designed in consideration of physical and/or chemical characteristics and/or mixing ratios, and the like of hydrocarbon compounds, steam and/or other substances contained in the fluid which is a pyrolysis target. Figures 5 to 7 illustrate the shapes of the pipelines (10). Figure 5 shows a pipeline (10) having a form in which U-shapes are repeatedly provided, and Figure 6 shows pipelines (10) arranged out of alignment with each other so that pipelines (10) having a form in which U-shapes are repeatedly provided do not overlap. Figure 7 shows a pipeline (10) having a U-shape, and Figure 8 shows a pipeline (10) having a linear shape.

The pipeline (10) of the fluid heating device (1) according to one example of the present application may be designed in the most appropriate form in comprehensive consideration of physical and/or chemical characteristics and/or mixing ratios of hydrocarbon compounds, steam and/or other substances included in the fluid which is a pyrolysis target; the residence time of the fluid; driving cycle; and/or the type and size of a facility including devices, and the like.

The cross-sectional shape of the pipeline (10) is not particularly limited, which may be appropriately adopted in consideration of the physical and/or chemical properties and mixing ratios, and the like of hydrocarbon compounds, steam and/or other substances contained in the fluid which is a pyrolysis target.

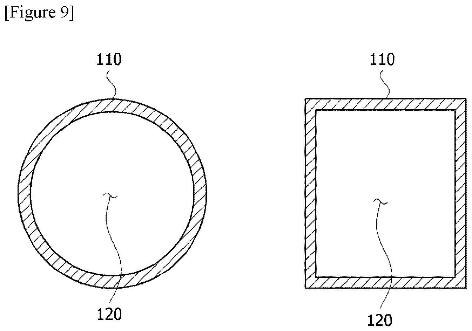

Figure 9 is an example of a cross-sectional shape of the pipeline (10). The cross section of the pipeline (10) may include a circular surface (110) and an internal passage (120), or may include a rectangular surface (110) and an internal passage (120), as shown in Figure 9. However, the cross section of the pipeline (10) in Figure 9 above is one example, and the cross section of the pipeline (10) may have various shapes such as a triangle, a rhombus, a parallelogram, and/or an ellipse. The internal passage (120) may be an empty space through which the fluid flows. In addition, in order that the surface (110) of the pipeline generates or transfers the thermal energy to be described below, a material having an excellent thermal conductivity and high durability against heat, and generating resistance heat when the current passes may be selected and applied thereto. In one example, the pipeline (10) or its surface (110) may be made of nickel, chromium, and/or an alloy material of nickel and chromium, and the like, or comprise the same.

The length of the pipeline (10) is not particularly limited, which may be appropriately adopted in consideration of physical and/or chemical characteristics and/or mixing ratios, and the like of hydrocarbon compounds, steam and/or other substances contained in the fluid which is a pyrolysis target.

In the exemplary fluid heating device (1), the fluid may flow through the internal passage (120) of the pipeline (10).

At this time, the pipeline (10) or the internal passage (120) of the pipeline (10) may be divided into two or more heat absorbing regions.

The heat absorbing region may be a region (e.g., a region directly receiving thermal energy from the heat generating unit) receiving thermal energy from the heat generating unit. That is, the heat absorbing region may be a region to which the heat generating unit applies thermal energy. For example, the heat absorbing region may mean, i) when the heat generating unit is a part of the pipeline (10), an internal passage (120) of the pipeline (10), and may be, ii) when the heat generating unit is an external heat source (40) provided while being spaced apart from the pipeline (10), an internal passage (120) of a partial region of the pipeline (10) located at the shortest distance from the external heat source (40).

In the fluid heating device (1), the two or more heat absorbing regions may be regions each independently receiving thermal energy. For example, the two or more heat absorbing regions may be regions each independently receiving thermal energy from separate divided heat generating units. The thermal energy received by each of the heat absorbing regions may be one generated from the corresponding heat generating unit.

The pipeline (10) of the fluid heating device (1) or the internal passage (120) thereof may comprise a non-heat absorbing region. As described above, the internal passage (120) may be divided into two or more heat absorbing regions. The non-heat absorbing region may be a portion that does not correspond to the heat absorbing region, or a portion that does not directly receive thermal energy from the heat generating unit. The non-heat absorbing region may be a partial region of the internal passage (120) that does not directly receive thermal energy from the heat generating unit. Even in the non-heat absorbing region, the thermal energy obtained as the heated fluid contacts, the thermal energy obtained indirectly rather than directly from the heat generating unit, and other thermal energy may also be received.

The fluid heating device (1) according to one example of the present application may heat the fluid flowing through the internal passage (120) with the thermal energy received in each heat absorbing region. The thermal energy may heat the fluid flowing through the internal passage (120) in the pipeline (10). The heating of the fluid may mean that the temperature of the fluid is increased, or that the fluid absorbs heat. Cracking may be performed through heating or heat-absorbing by the thermal energy of such a fluid, and accordingly, major olefins (ethylene and/or propylene, etc.), and/or hydrogen, and the like, which are basic raw materials for petrochemicals, may be produced.

The fluid heating device (1) according to one example of the present application may comprise two or more heat generating units each independently generating thermal energy received by each heat absorbing region. The thermal energy received by each heat absorbing region may be generated by each heat generating unit.

By adopting this method, the fluid heating device (1) according to one example of the present application can control the inflow heat fluxes themselves, respectively, in accordance with the progress degree of pyrolysis, and through this, can improve the yield of the target compounds in the cracking process. By adopting this method, the fluid heating device (1) according to one example of the present application adjusts the thermal energy generated by each heat generating unit, whereby it can control inflow heat fluxes themselves, respectively, in accordance with the progress degree of pyrolysis in consideration of physical and/or chemical characteristics of various pyrolysis targets, and through this, can reduce or suppress the occurrence of by-products such as coke, or side reactions.

The fluid heating device (1) according to one example of the present application may comprise at least one heat generating unit that converts electrical energy into thermal energy. When the electrical energy is injected, the heat generating unit may generate thermal energy, and the generated thermal energy may be transferred to the fluid flowing through the internal passage (120).

The fluid heating device (1) according to one example of the present application may comprise at least one heat generating unit supplied with electric energy through a direct current or an alternating current. The direct current or alternating current may be supplied to the heat generating unit by electrically connecting the heat generating unit and the power-supply device (30) directly or indirectly. At this time, when the power-supply device (30) is a direct-current power-supply device, the direct current may be supplied, and when the power-supply device (30) is an alternating-current power-supply device, the alternating current may be supplied. The fluid heating device (1) according to one example of the present application may use a direct-current power-supply device or an alternating-current power-supply device according to needs.

The term direct current as used in the present application may mean an electric current that flows in a constant direction regardless of time, and the alternating current may mean an electric current whose magnitude and phase periodically change with time. The direct-current power-supply device may provide a voltage that does not depend on time, and the alternating-current power-supply device may provide a voltage whose magnitude and phase periodically change with time.

The fluid heating device (1) according to one example of the present application can reduce the amount of production of greenhouse gases (methane and carbon dioxide, etc.) by generating thermal energy by electrical energy supply, and the heat absorbing regions may each independently receive the thermal energy.

In the fluid heating device (1) according to one example of the present application, at least one heat generating unit may be a pipeline (10) generating resistance heat by energization. The direct current or alternating current may be applied to the pipeline (10) to generate the resistance heat. As described above, the direct current and alternating current may be supplied as the power-supply device (30) is electrically connected to a portion of the pipeline (10) directly or indirectly.

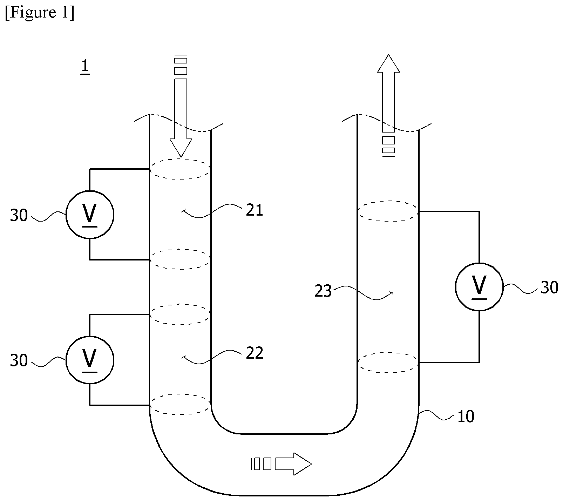

Figure 1 shows simply a schematic diagram of a fluid heating device (1) according to one example of the present application. The fluid heating device (1) of the present application is not limited to the structure shown in Figure 1, and Figure 1 shows merely an example.

The fluid heating device (1) of Figure 1 comprises a U-shaped pipeline (10), and the pipeline (10) is divided into three heat absorbing regions (21, 22 and 23) along the direction in which the fluid flows. In the respective heat absorbing regions (21, 22 and 23), the respective power-supply devices (30) may be directly connected to the corresponding pipeline (10) or its outer surface. The respective power-supply devices (30) may be a direct-current power-supply device or an alternating-current power-supply device, all may be direct-current power-supply devices, all may be alternating-current power-supply devices, and some may be direct-current power-supply devices and others may be alternating-current power-supply devices.

In the above structure, in order that the pipeline (10) or its surface (110) generates thermal energy and transfers the generated thermal energy to the fluid flowing in the internal passage (120), a material having an excellent thermal conductivity and high durability against heat, and generating resistance heat when passing through the electric current may be selected and applied. In one example, the pipeline (10) or its surface (110) may be made of nickel, chromium and/or an alloy material of nickel and chromium, and the like, or may comprise the same.

Referring to Figure 1, the alternating current or direct current generated in each power-supply device (30) is supplied to the outer surface (110) of the pipeline (10), the outer surface (110) generates resistance heat due to the alternating current or direct current, and the generated resistance heat is received by each of the heat absorbing regions (21, 22 and 23), so that the thermal energy can be transferred to the fluid flowing in the heat absorbing regions (21, 22 and 23). When the thermal energy required in a specific heat absorbing region is designed to be high, more thermal energy can be transferred by increasing the electric current of the alternating current or direct current supplied from the power-supply device (30). Conversely, when the thermal energy required in a specific heat absorbing region is designed to be small, less thermal energy can be transferred by lowering the electric current of the alternating current or direct current supplied from the power-supply device (30). This adjustment can be performed through the respective power-supply devices (30) corresponding to the heat absorbing regions (21, 22 and 23), and for this reason, the inflow heat fluxes themselves in accordance with the progress degree of pyrolysis can each be controlled.

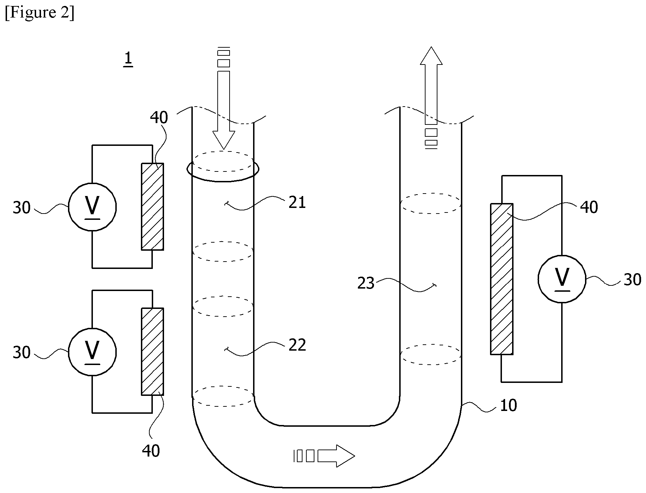

In the fluid heating device (1) according to one example of the present application, at least one heat generating unit may be an external heat source (40) provided while being spaced apart from the pipeline (10). Such a form is illustrated in Figure 2. The external heat source (40) may be a device that receives electrical energy and converts it into thermal energy. The thermal energy converted by the external heat source (40) may be transferred to the pipeline (10) to heat the fluid flowing in the internal passage (120) of the pipeline (10), or the fluid may absorb the thermal energy.

Figure 2 shows simply a schematic diagram of a fluid heating device (1) according to one example of the present application. The fluid heating device (1) of the present application is not limited to the structure shown in Figure 2, and Figure 2 shows merely an example.

The fluid heating device (1) of Figure 2 has a U-shaped pipeline (10), and this pipeline (10) is divided into three heat absorbing regions (21, 22 and 23) along the direction in which the fluid flows. Each of the heat absorbing regions (21, 22 and 23) may receive thermal energy generated from external heat sources (40) each independently provided while being spaced apart from the pipeline (10).

The external heat source (40) may be electrically connected to the power-supply device (30) directly or indirectly to receive electrical energy. The power-supply device (30) may be a direct-current power-supply device and/or an alternating-current power-supply device. The external heat source (40) may generate resistance heat with electrical energy supplied through the power-supply device (30), and the generated resistance heat may be received by each heat absorbing region to heat the fluid, or the fluid may absorb the thermal energy. When the thermal energy required in a specific heat absorbing region is designed to be high, more thermal energy can be transferred by increasing the electric current of the alternating current or direct current supplied from the power-supply device (30). When the thermal energy required in a specific heat absorbing region is designed to be small, less thermal energy can be transferred by lowering the electric current of the alternating current or direct current supplied from the power-supply device (30). For this reason, the inflow heat fluxes themselves in accordance with the progress degree of pyrolysis can each be controlled.

The external heat sources (40) may be each independently provided to transfer thermal energy to at least a portion of the surface of the pipeline (10) corresponding to each of the heat absorbing regions (21, 22 and 23) while being spaced apart from the pipeline (10). For example, referring to Figure 2, it can be confirmed that the external heat sources (40) can transfer thermal energy to a portion of the surface of the pipeline (10) corresponding to each of the heat absorbing regions (21, 22 and 23) of the U-shaped pipeline (10).

Although not shown in the drawings, the external heat sources (40) may be provided such that they may transfer thermal energy to all surfaces of the pipeline (10) corresponding to each of the heat absorbing regions (21, 22 and 23) while being spaced apart from the pipeline (10). For example, the external heat sources (40) may be provided in the form of surrounding the corresponding pipeline (10) so that the thermal energy is transferred to all surfaces of the pipeline (10) corresponding to each of the heat absorbing regions (21, 22 and 23). If the thermal energy can be transferred to all surfaces of the corresponding pipeline (10), it is not limited to the above structure. When the external heat sources (40) are configured such that the thermal energy is transferred to all surfaces of the pipeline (10) corresponding to each of the heat absorbing regions (21, 22 and 23), it is possible to prevent non-uniform heating from being formed by transferring thermal energy only to a specific location to the fluid flowing in each of the heat absorbing regions (21, 22 and 23).

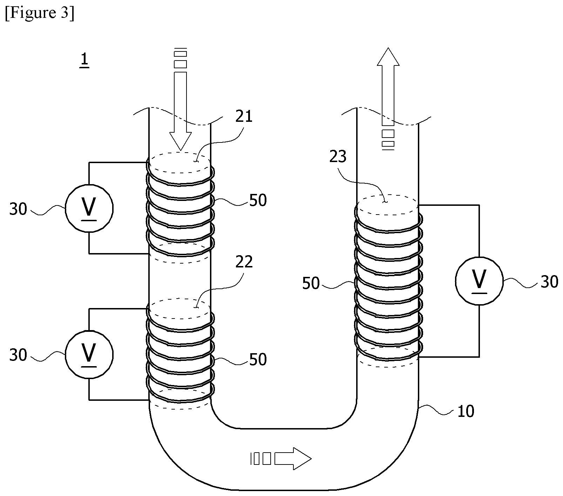

In the fluid heating device (1) according to one example of the present application, at least one heat generating unit may be a pipeline (10) in which an induced current is generated to generate resistance heat. This case is illustrated in Figure 3. In such a structure, the pipeline (10) may generate resistance heat due to an induced current. The induced current may be one generated when an alternating current is applied to a coil wire (50) provided while surrounding the pipeline (10) in a spiral shape and being spaced apart therefrom.

Figure 3 shows simply a schematic diagram of a fluid heating device (1) according to one example of the present application. The fluid heating device (1) of the present application is not limited to the structure shown in Figure 3, and Figure 3 shows merely an example.

The fluid heating device (1) of Figure 3 comprises a U-shaped pipeline (10), and the pipeline (10) is divided into three heat absorbing regions (21, 22 and 23) along the direction in which the fluid flows. In each of the heat absorbing regions (21, 22 and 23), a coil wire (50) provided while surrounding each pipeline (10) in a spiral shape and being spaced apart therefrom is provided. The coil wire (50) may be connected to a power-supply device (30) so that an alternating current may flow, and the power-supply device (30) may be an alternating-current power-supply device to apply the alternating current. When the alternating current is applied to the coil wire (50), an induced current is generated on the surface (110) of the pipeline (10) due to an electromagnetic induction phenomenon. The resistance heat may be generated on the surface (110) of the pipeline (10) due to the generated induced current, and the generated resistance heat may heat the fluid flowing in each of the heat absorbing regions (21, 22 and 23), or the thermal energy may be transferred to the fluid. While the induced current is generated by the coil wire (50), a material in which the resistance heat is generated by the generated induced current may be selected and applied to the surface (110) of the pipeline (10). In one example, the pipeline (10) or its surface (110) may be made of nickel, chromium and/or an alloy material of nickel and chromium, or may comprise the same.

When the thermal energy required in a specific heat absorbing region is designed to be high, more thermal energy can be transferred by increasing the electric current of the alternating current or direct current supplied from the power-supply device (30). When the thermal energy required in a specific heat absorbing region is designed to be small, less thermal energy can be transferred by lowering the electric current of the alternating current or direct current supplied from the power-supply device (30). This can be performed through each of the power-supply devices (30) corresponding to the heat absorbing regions (21, 22 and 23), and for this reason, the inflow heat fluxes themselves in accordance with the progress degree of pyrolysis can each be controlled. Furthermore, in this case, the intensity of the induced current can be adjusted by the number of turns of the coil wire (50), a predetermined distance spaced apart from the pipeline (10), and the material of the coil wire (50), and the like, and based on this, it is possible to each independently transfer the thermal energy.

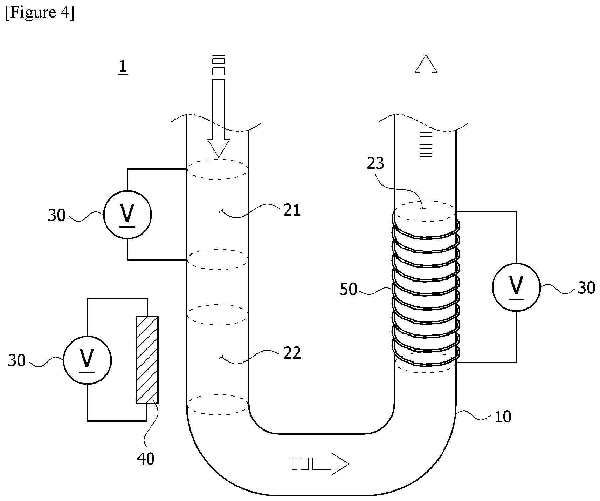

The fluid heating device (1) according to one example of the present application may use several types of heat generating units. Figure 4 shows such a fluid heating device (1) exemplarily and diagrammatically. Referring to Figure 4, the first heat absorbing region (21) receives the thermal energy converted through the electrical energy supplied as the power-supply device (30) is directly connected to the outer surface (110) of the corresponding pipeline (10). The second heat absorbing region (22) receives the thermal energy generated from the external heat source (40), and the third heat absorbing region (23) receives the thermal energy formed by the induced current formed by applying an alternating current to the coil wire (50) provided while surrounding the pipeline (10) in a spiral shape and being spaced apart therefrom, whereby the formed induced current flows on the surface (110) of the pipeline (10).

In the present application, the pipeline (10) or the power-supply device (30) directly connected to the outer surface thereof (hereinafter, may be referred to as a first electrical heat generating unit) as illustrated in Figures 1 and 4, the pipeline (10) and the electrical external heat source (40) provided while being spaced apart therefrom (hereinafter, may be referred to as a second electrical heat generating unit) as illustrated in Figures 2 and 4, and the heat source (50) generating the induced current (hereinafter, may referred to as a third electrical heat generating unit) as illustrated in Figures 3 and 4 may all be electrical heat generating units that convert electrical energy into thermal energy.

In one example, among all heat generating units provided in the fluid heating device of the present application, a certain level or more may be the electrical heat generating units. For example, the lower limit of the ratio of the number of electrical heat generating units among all the heat generating units provided in the fluid heating device may be 50%, 55%, 60%, 65%, 70%, 75%, 80%, 85%, 90% or 95% or so, and the upper limit may be 100% or so. The ratio of the number of electrical heat generating units may be less than or equal to the above-described upper limit while being more than or equal to, or more than any one of the above-described lower limits. Also, all the electrical heat generating units provided in the fluid heating device may be any one type of the first to third electrical heat generating units, and in some cases, they may be a combination of two types or more of the first to third electrical heat generating units. In addition, even when all the electrical heat generating units are any one type of the first to third electrical heat generating units, the forms or amounts of thermal energy generated by the respective heat generating units may be different from each other.

According to the fluid heating device of the present application, the process can be efficiently performed by applying thermal energy in a different form to each of the two or more divided heat absorbing regions.

In one example, two or more heat absorbing regions divided from each other in the fluid heating device may be arranged such that the fluid moving through the pipeline may pass through heat absorbing regions in which the absolute value of the deviation ΔH of the applied thermal energy according to the following equation 1 is a predetermined range or more.

[Equation 1]

$$\Delta H = 100\% \times (H1{-}H2)/H2$$

In Equation 1, H1 is the thermal energy applied to any one of the two or more heat absorbing regions, and H2 is the thermal energy applied to the heat absorbing region different from the heat absorbing region to which the thermal energy of H1 is applied.

The fluid may also pass through the heat absorbing region in which the applied thermal energy is H2 after passing through the heat absorbing region in which the applied thermal energy is H1, and may also pass through the heat absorbing region in which the applied thermal energy is H1 after passing through the heat absorbing region in which the applied thermal energy is H2.

The thermal energy is thermal energy applied per unit time to each heat absorbing region, where the unit may be cal/sec.

The lower limit of the absolute value of ΔH in Equation 1 above may be 10%, 20%, 30%, 40%, 50%, 60%, 70%, 80%, 90%, 100%, 110%, 120% or 130% or so, and the upper limit thereof may also be 1000%, 900%, 800%, 700%, 600%, 500%, 400%, 300%, 200%, 100%, 90%, 80%, 70%, 60% or 50% or so. The absolute value of ΔH in Equation 1 above may be more than or equal to, or more than any one of the above-described lower limits, or may be within a range of less than or equal to, or less than any one of the above-described upper limits while being more than or equal to, or more than any one of the above-described lower limits. ΔH in Equation 1 above may be a negative number or a positive number.

That is, the fluid heating device having the two or more divided heat absorbing regions may comprise a region where the applied thermal energy is relatively large and a region where the applied thermal energy is relatively small, and the fluid may move through the regions sequentially or alternately.

For example, the heat absorbing regions of the fluid heating device may be arranged so that the thermal energy applied to the fluid decreases and then increases, or increases and then decreases, along the direction of the fluid flow. At this time, the increase or decrease of the thermal energy may proceed so that the absolute value of ΔH in Equation 1 above falls within the above range.

In one example, the plurality of heat absorbing regions of the fluid heating device may be arranged such that the fluid repeatedly experiences the absolute value of the deviation ΔH of thermal energy of Equation 1 in the above-described range along the flow direction while moving along the pipeline. That is, the plurality of heat absorbing regions may be arranged such that the fluid experiences one or more of the increase and decrease of thermal energy according to the absolute value of the deviation ΔH of the thermal energy of Equation 1 in the above-described range two times or more while moving along the pipeline. The lower limit of number of times of one or more of the increase and decrease of the thermal energy according to the absolute value of the deviation ΔH of the thermal energy of Equation 1 in the above-described range experienced by the fluid may be 2 times, 3 times or 4 times or so, and the upper limit thereof may be 10 times, 9 times, 8 times, 7 times, 6 times, 5 times, 4 times, 3 times, or 2 times or so. The number of times may be more than or equal to, or more than any one of the above-described lower limits, or may be within a range of less than or equal to, or less than any one of the above-described upper limits while being more than or equal to, or more than any one of the above-described lower limits.

When the fluid experiences the increase of the thermal energy, the lower limit of ΔH in Equation 1 above may be 10%, 20%, 30% or 40% or so, and the upper limit may also be 1000%, 900%, 800%, 700%, 600%, 500%, 400%, 300%, 200%, 100%, 90%, 80%, 70%, 60% or 50% or so. ΔH in Equation 1 above may be more than or equal to, or more than any one of the above-described lower limits, or may be within a range of less than or equal to, or less than any one of the above-described upper limits while being more than or equal to, or more than any one of the above-described lower limits. In this case, in Equation 1, H1 is the thermal energy applied to the heat absorbing region in which the applied thermal energy is greater among the two heat absorbing regions in which the fluid moves, and H2 is the thermal energy applied to the heat absorbing region in which the applied thermal energy is smaller among the two heat absorbing regions in which the fluid moves. The fluid may pass through the heat absorbing region in which the applied thermal energy is smaller, and then pass through the heat absorbing region in which the applied thermal energy is greater again. In this case, the fluid may not pass through another heat absorbing region between the two heat absorbing regions.

When the fluid experiences the decrease of the thermal energy, the lower limit of ΔH in Equation 1 above may be 30%, 40%, 50%, 60%, 70%, 80%, 90%, 100%, 110%, 120% or 130% or so, and the upper limit may also be 1000%, 900%, 800%, 700%, 600%, 500%, 400%, 300%, 200%, 100%, 90% or 80% or so. ΔH in Equation 1 above may be more than or equal to, or more than any one of the above-described lower limits, or may be within a range of less than or equal to, or less than any one of the above-described upper limits while being more than or equal to, or more than any one of the above-described lower limits. In this case, in Equation 1, H1 is the thermal energy applied to the heat absorbing region in which the applied thermal energy is greater among the two heat absorbing regions in which the fluid moves, and H2 is the thermal energy applied to the heat absorbing region in which the applied thermal energy is smaller among the two heat absorbing regions in which the fluid moves. The fluid may pass through the heat absorbing region in which the applied thermal energy is greater, and then pass through the heat absorbing region in which the applied thermal energy is smaller again. In this case, the fluid may not pass through another heat absorbing region between the two heat absorbing regions.

Depending on the purpose of the process, the process can be performed more effectively by adjusting the applied thermal energy as described above.

In one example, two or more heat absorbing regions divided from each other in the fluid heating device may be arranged such that the fluid moving through the pipeline may pass through heat absorbing regions in which the absolute value of the deviation ΔF of the applied heat flux according to the following equation 2 is a predetermined range or more.

$$[\text{Equation 2}]$$

$$\Delta F = 100\% \times (F1{-}F2)/F2$$

In Equation 2, F1 is the heat flux in any one of the two or more heat absorbing regions, and F2 is the heat flux in the heat absorbing region different from the heat absorbing region with the heat flux of F1.

The fluid may also pass through the heat absorbing region with the heat flux of F1, and then pass through the heat absorbing region with the heat flux of F2, and may also pass through the heat absorbing region with the heat flux of F2, and then pass through the heat absorbing region with the heat flux of F1.

The unit of the heat flux may be $W/cm^2$.

The lower limit of the absolute value of ΔF in Equation 2 above may be 10%, 20%, 30%, 40%, 50%, 60%, 70%, 80%, 90%, 100%, 110%, 120% or 130% or so, and the upper limit thereof may also be 1000%, 900%, 800%, 700%, 600%, 500%, 400%, 300%, 200%, 100%, 90%, 80%, 70%, 60% or 50% or so. The absolute value of ΔF in Equation 2 may be more than or equal to, or more than any one of the above-described lower limits, or may be within a range of less than or equal to, or less than any one of the above-described upper limits while being more than or equal to, or more than any one of the above-described lower limits. ΔF in Equation 2 above may be a negative number or a positive number.

That is, the fluid heating device having the two or more divided heat absorbing regions may comprise a region having a relatively large heat flux and a region having a small heat flux, and the fluid may move through the regions sequentially or alternately.

For example, the heat absorbing regions of the fluid heating device may be arranged such that the fluid is exposed to the heat flux that decreases and then increases, or may be arranged such that it is exposed to the heat flux that increases and then decreases, in the process of moving along the direction of the fluid flow. At this time, the increase or decrease of the heat flux may proceed so that the absolute value of ΔF in Equation 2 above falls within the above range.

In one example, the plurality of heat absorbing regions of the fluid heating device may be arranged such that the fluid repeatedly experiences the absolute value of the deviation ΔF of heat flux of Equation 2 in the above-described range along the flow direction while moving along the pipeline. That is, the plurality of heat absorbing regions may be arranged such that the fluid experiences one or more of the increase and decrease of heat flux according to the absolute value of the deviation ΔF of the heat flux of Equation 2 in the above-described range two times or more while moving along the pipeline. The lower limit of number of times of one or more of the increase and decrease of the heat flux according to the absolute value of the deviation ΔF of the heat flux of Equation 2 in the above-described range experienced by the fluid may be 2 times, 3 times or 4 times or so, and the upper limit thereof may be 10 times, 9 times, 8 times, 7 times, 6 times, 5 times, 4 times, 3 times, or 2 times or so. The number of times may be more than or equal to, or more than any one of the above-described lower limits, or may be within a range of less than or equal to, or less than any one of the above-described upper limits while being more than or equal to, or more than any one of the above-described lower limits.

When the fluid experiences the increase of the heat flux, the lower limit of the absolute value of ΔF in Equation 2 above may be 10%, 20%, 30%, 40%, 50%, 60%, 70%, 80%, 90%, 100%, 110%, 120% or 130% or so, and the upper limit thereof may also be 1000%, 900%, 800%, 700%, 600%, 500%, 400%, 300%, 200%, 100%, 90%, 80%, 70%, 60% or 50% or so. The absolute value of ΔF in Equation 2 above may be more than or equal to, or more than any one of the above-described lower limits, or may be within a range of less than or equal to, or less than any one of the above-described upper limits while being more than or equal to, or more than any one of the above-described lower limits. The fluid may be exposed to the small heat flux, and then exposed to the large heat flux again.

When the fluid experiences the decrease of the heat flux, the lower limit of the absolute value of ΔF in Equation 2 above may be 10%, 20%, 30%, 40%, 50%, 60%, 70%, 80%, 90%, 100%, 110%, 120% or 130% or so, and the upper limit thereof may also be 1000%, 900%, 800%, 700%, 600%, 500%, 400%, 300%, 200%, 100%, 90%, 80%, 70%, 60% or 50% or so. The absolute value of ΔF in Equation 2 above may be more than or equal to, or more than any one of the above-described lower limits, or may be within a range of less than or equal to, or less than any one of the above-described upper limits while being more than or equal to, or more than any one of the above-described lower limits. The fluid may be exposed to the large heat flux, and then exposed to the small heat flux.

Depending on the purpose of the process, the process can be performed more effectively by adjusting the heat flux as described above.

In one example, the two or more heat absorbing regions of the fluid heating device may be arranged such that the fluid is exposed to the heat flux or applied thermal energy which periodically fluctuates in the internal passage along the direction of the fluid flow. Here, the periodic fluctuation of the heat flux or applied thermal energy means that the fluid is exposed 2 times or more to a trend in which the heat flux or applied thermal energy increases and then decreases. That is, when one cycle is defined from the time point that the heat flux or applied thermal energy starts to increase to the time point that the heat flux or applied thermal energy decreases and then starts to increase again, the fluid may be exposed to the one cycle 2 times or more while moving along the flow direction.

The lower limit of the number of times that the fluid is exposed to the one cycle may be 2 times, 3 times, 4 times, 5 times or 6 times or so, and the upper limit thereof may be 100 times, 95 times, 90 times, 85 times, 80 times, 75 times, 70 times, 65 times, 60 times, 55 times, 50 times, 45 times, 40 times, 35 times, 30 times, 25 times, 20 times, 15 times, 10 times, 9 times, 8 times, 7 times or 6 times or so. The number of times may be more than or equal to, or more than any one of the above-described lower limits, or may be within a range of less than or equal to, or less than any one of the above-described upper limits while being more than or equal to, or more than any one of the above-described lower limits.

In the periodic fluctuation, the lower limit of the deviation between the maximum value and the minimum value of the heat flux or thermal energy in one cycle (i.e., from the time point that the heat flux or thermal energy starts to increase to the time point that the heat flux or thermal energy increases and then decreases, and then starts to increase again) may be 1%, 1.5%, 2%, 5%, 25%, 50%, 75%, 100%, 150%, 200%, 250%, 300%, 350%, 400%, 450%, 500%, 550%, 600%, 650%, 700% or 750% or so, and the upper limit thereof may be 10,000%, 5,000%, 4,500%, 4,000%, 3,500%, 3,000%, 2,500%, 2,000%, 1,500%, 1,000%, 950%, 900%, 850%, 800%, 750%, 700%, 650%, 600%, 550%, 500%, 450%, 400%, 350%, 300%, 250%, 200%, 150%, 100%, 90%, 80%, 70%, 60%, 50%, 40%, 30%, 20%, 10%, 9%, 8%, 7%, 6%, 5%, 4% or 3% or so. The deviation may be more than or equal to, or more than any one of the above-described lower limits, or may be within a range of less than or equal to, or less than any one of the above-described upper limits while being more than or equal to, or more than any one of the above-described lower limits. When the largest heat flux or thermal energy value in the one cycle is set to A and the smallest heat flux or thermal energy value in the one cycle is set to B, the deviation is a value calculated as $100 \times (A-B)B$.

Meanwhile, in the periodic fluctuation, the ratio of the length of one cycle (i.e., from the time point that the heat flux or thermal energy starts to increase to the time point that the heat flux or thermal energy increases and then decreases, and then starts to increase again) to the total length of the pipeline or the length of the pipeline through which the fluid moves may be adjusted. For example, the lower limit of the ratio may be 1%, 2%, 3%, 4%, 5%, 6%, 7%, 8%, 9%, 10%, 15%, 20%, 25% or 30%. or so, and the upper limit thereof may be 200%, 195%, 190%, 185%, 180%, 175%, 170%, 165%, 160%, 155%, 150%, 145%, 140%, 135%, 130%, 125%, 120%, 115%, 110%, 105%, 100%, 95%, 90%, 85%, 80%, 75%, 70%, 65%, 60%, 55%, 50%, 45%, 40%, 35%, 30%, 25%, 20%, 15% or 10% or so. The ratio may be more than or equal to, or more than any one of the above-described lower limits, or may be within a range of less than or equal to, or less than any one of the above-described upper limits while being more than or equal to, or more than any one of the above-described lower limits. When the total length of the pipeline through which the fluid moves in the fluid heating device is set to L and the length of the one cycle is set to L1, the ratio is a value calculated by $100 \times L1/L$.

The method of generating such periodic fluctuations or fluctuations of the heat flux or applied thermal energy in the pipeline is not particularly limited. For example, the periodic fluctuation or the fluctuation of the heat flux or applied thermal energy can be secured through adjustment of the type of heat generating units present in the fluid heating device, the magnitude of heat applied to each unit and/or the interval between the units, and the like.

By arranging the heat absorbing regions so that the fluid heating device can be driven in this way, the process can be effectively performed according to the purpose.

The present application also relates to a method of heating a fluid using the fluid heating device or a method of producing a product by heating a fluid using the fluid heating device.

At this time, the type of the product is not particularly limited, which may be determined according to the raw material to be heated or reacted using the fluid heating device. For example, when the method is a cracking process, or a part of the process, the product may be ethylene, propylene and/or hydrogen, and the like, but is not limited thereto.

The method may be performed using the above-described fluid heating device. Therefore, the above-described contents may be equally applied to the specific details of the fluid heating device used in the method.

For example, the method may comprise a step of independently applying thermal energy to two or more divided heat absorbing regions of the fluid heating device while moving a fluid through the internal passage of the pipeline of the fluid heating device.

Here, the thermal energy applied to the respective heat absorbing regions may be generated by different heat generating units, where at least one of the heat generating units may be the above-described electrical heat generating unit.

This method may be performed such that the fluid is exposed to appropriate thermal energy or heat flux while moving through the pipeline.

For example, in the above method, the application of thermal energy to the heat absorbing regions may be performed such that the fluid may pass through heat absorbing regions in which the absolute value of the deviation $\Delta H$ of the applied thermal energy according to the following equation 1 is a predetermined range or more while moving through the pipeline of the fluid heating device.

[Equation 1]

$$\Delta H = 100\% \times (H1{-}H2)/H2$$

In Equation 1, H1 is the thermal energy applied to any one of the two or more heat absorbing regions, and H2 is the thermal energy applied to the heat absorbing region different from the heat absorbing region to which the thermal energy of H1 is applied.

The fluid may also pass through the heat absorbing region in which the applied thermal energy is H2 after passing through the heat absorbing region in which the applied thermal energy is H1, and may also pass through the heat absorbing region in which the applied thermal energy is H1 after passing through the heat absorbing region in which the applied thermal energy is H2. The thermal energy is thermal energy applied per unit time to each heat absorbing region, where the unit may be cal/sec.

The lower limit of the absolute value of $\Delta H$ in Equation 1 above may be 10%, 20%, 30%, 40%, 50%, 60%, 70%, 80%, 90%, 100%, 110%, 120% or 130% or so, and the upper limit thereof may also be 1000%, 900%, 800%, 700%, 600%, 500%, 400%, 300%, 200%, 100%, 90%, 80%, 70%, 60% or 50% or so. The absolute value of $\Delta H$ in Equation 1 above may be more than or equal to, or more than any one of the above-described lower limits, or may be within a range of less than or equal to, or less than any one of the above-described upper limits while being more than or equal to, or more than any one of the above-described lower limits. $\Delta H$ in Equation 1 above may be a negative number or a positive number.

That is, the fluid heating device having the two or more divided heat absorbing regions may comprise a region where the applied thermal energy is relatively large and a region where the applied thermal energy is relatively small, and the fluid may move through the regions sequentially or alternately.

For example, the application of thermal energy to the heat absorbing regions of the fluid heating device may be performed such that the fluid is exposed to thermal energy that decreases and then increases, or is exposed to thermal energy that increases and then decreases while moving along the direction of the fluid flow. At this time, the increase or decrease of the thermal energy may proceed so that the absolute value of $\Delta H$ in Equation 1 above falls within the above range.

In one example, the application of thermal energy to the plurality of heat absorbing regions of the fluid heating device may be performed such that the fluid repeatedly experiences the absolute value of the deviation $\Delta H$ of thermal energy of Equation 1 in the above-described range along the flow direction while moving along the pipeline. That is, the application of thermal energy to the plurality of heat absorbing regions may be performed such that the fluid experiences one or more of the increase and decrease of thermal energy according to the absolute value of the deviation $\Delta H$ of the thermal energy of Equation 1 in the above-described range two times or more while moving along the pipeline. The lower limit of number of times of one or more of the increase and decrease of the thermal energy according to the absolute value of the deviation $\Delta H$ of the thermal energy of Equation 1 in the above-described range experienced by the fluid may be 2 times, 3 times or 4 times or so, and the upper limit thereof may be 10 times, 9 times, 8 times, 7 times, 6 times, 5 times, 4 times, 3 times, or 2 times or so. The number of times may be more than or equal to, or more than any one of the above-described lower limits, or may be within a range of less than or equal to, or less than any one of the above-described upper limits while being more than or equal to, or more than any one of the above-described lower limits.

When the thermal energy is applied so that the fluid experiences the increase of the thermal energy, the lower limit of ΔH in Equation 1 above may be 10%, 20%, 30% or 40% or so, and the upper limit may also be 1000%, 900%, 800%, 700%, 600%, 500%, 400%, 300%, 200%, 100%, 90%, 80%, 70%, 60% or 50% or so. ΔH in Equation 1 above may be more than or equal to, or more than any one of the above-described lower limits, or may be within a range of less than or equal to, or less than any one of the above-described upper limits while being more than or equal to, or more than any one of the above-described lower limits. In this case, in Equation 1, H1 is the thermal energy applied to the heat absorbing region in which the applied thermal energy is greater among the two heat absorbing regions in which the fluid moves, and H2 is the thermal energy applied to the heat absorbing region in which the applied thermal energy is smaller among the two heat absorbing regions in which the fluid moves. The fluid may pass through the heat absorbing region in which the applied thermal energy is smaller, and then pass through the heat absorbing region in which the applied thermal energy is greater again. In this case, the fluid may not pass through another heat absorbing region between the two heat absorbing regions.

When thermal energy is applied so that the fluid experiences the decrease of the thermal energy, the lower limit of ΔH in Equation 1 above may be 30%, 40%, 50%, 60%, 70%, 80%, 90%, 100%, 110%, 120% or 130% or so, and the upper limit may also be 1000%, 900%, 800%, 700%, 600%, 500%, 400%, 300%, 200%, 100%, 90% or 80% or so. ΔH in Equation 1 above may be more than or equal to, or more than any one of the above-described lower limits, or may be within a range of less than or equal to, or less than any one of the above-described upper limits while being more than or equal to, or more than any one of the above-described lower limits. In this case, in Equation 1, H1 is the thermal energy applied to the heat absorbing region in which the applied thermal energy is greater among the two heat absorbing regions in which the fluid moves, and H2 is the thermal energy applied to the hat absorbing region in which the applied thermal energy is smaller among the two heat absorbing regions in which the fluid moves. The fluid may pass through the heat absorbing region in which the applied thermal energy is greater, and then pass through the heat absorbing region in which the applied thermal energy is smaller again. In this case, the fluid may not pass through another heat absorbing region between the two heat absorbing regions.

Depending on the purpose of the process, the process can be performed more effectively by adjusting the applied thermal energy as described above.

In one example, in the above method, the application of thermal energy to two or more divided heat absorbing regions of the fluid heating device may be performed such that the fluid moving through the pipeline may be exposed to heat absorbing regions in which the absolute value of the deviation ΔF of the applied heat flux according to the following equation 2 is a predetermined range or more.

[Equation 2]

$$\Delta F = 100\% \times (F1{-}F2)/F2$$

In Equation 2, F1 is the heat flux in any one of the two or more heat absorbing regions, and F2 is the heat flux in the heat absorbing region different from the heat absorbing region with the heat flux of F1.

The fluid may also pass through the heat absorbing region with the heat flux of F1, and then pass through the heat absorbing region with the heat flux of F2, and may also pass through the heat absorbing region with the heat flux of F2, and then pass through the heat absorbing region with the heat flux of F1.

The unit of the heat flux may be W/cm$^2$.

The lower limit of the absolute value of ΔF in Equation 2 above may be 10%, 20%, 30%, 40%, 50%, 60%, 70%, 80%, 90%, 100%, 110%, 120% or 130% or so, and the upper limit thereof may also be 1000%, 900%, 800%, 700%, 600%, 500%, 400%, 300%, 200%, 100%, 90%, 80%, 70%, 60% or 50% or so. The absolute value of ΔF in Equation 2 may be more than or equal to, or more than any one of the above-described lower limits, or may be within a range of less than or equal to, or less than any one of the above-described upper limits while being more than or equal to, or more than any one of the above-described lower limits. ΔF in Equation 2 above may be a negative number or a positive number.

That is, the fluid heating device having the two or more divided heat absorbing regions may comprise a region having a relatively large heat flux and a region having a small heat flux, and the fluid may move through the regions sequentially or alternately.

For example, the application of thermal energy to the heat absorbing regions of the fluid heating device may be performed such that the fluid is exposed to the heat flux that decreases and then increases, or may be performed such that it is exposed to the heat flux that increases and then decreases, in the process of moving along the direction of the fluid flow. At this time, the increase or decrease of the heat flux may proceed so that the absolute value of ΔF in Equation 2 above falls within the above range.

In one example, the application of thermal energy to the plurality of heat absorbing regions of the fluid heating device may be arranged such that the fluid repeatedly experiences the absolute value of the deviation ΔF of heat flux of Equation 2 in the above-described range along the flow direction while moving along the pipeline. That is, the application of thermal energy to the plurality of heat absorbing regions may be performed such that the fluid experiences one or more of the increase and decrease of heat flux according to the absolute value of the deviation ΔF of the heat flux of Equation 2 in the above-described range two times or more while moving along the pipeline. The lower limit of number of times of one or more of the increase and decrease of the heat flux according to the absolute value of the deviation ΔF of the heat flux of Equation 2 in the above-described range experienced by the fluid may be 2 times, 3 times or 4 times or so, and the upper limit thereof may be 10 times, 9 times, 8 times, 7 times, 6 times, 5 times, 4 times, 3 times, or 2 times or so. The number of times may be more than or equal to, or more than any one of the above-described lower limits, or may be within a range of less than or equal to, or less than any one of the above-described upper limits while being more than or equal to, or more than any one of the above-described lower limits.

When the thermal energy is applied so that the fluid experiences the increase of the heat flux, the lower limit of the absolute value of ΔF in Equation 2 above may be 10%, 20%, 30%, 40%, 50%, 60%, 70%, 80%, 90%, 100%, 110%, 120% or 130% or so, and the upper limit thereof may also be 1000%, 900%, 800%, 700%, 600%, 500%, 400%, 300%, 200%, 100%, 90%, 80%, 70%, 60% or 50% or so. The absolute value of ΔF in Equation 2 above may be more than or equal to, or more than any one of the above-described lower limits, or may be within a range of less than or equal to, or less than any one of the above-described upper limits while being more than or equal to, or more than any one of the above-described lower limits. The fluid may be exposed to the small heat flux, and then exposed to the large heat flux again.

When the thermal energy is applied so that the fluid experiences the decrease of the heat flux, the lower limit of the absolute value of ΔF in Equation 2 above may be 10%, 20%, 30%, 40%, 50%, 60%, 70%, 80%, 90%, 100%, 110%, 120% or 130% or so, and the upper limit thereof may also be 1000%, 900%, 800%, 700%, 600%, 500%, 400%, 300%, 200%, 100%, 90%, 80%, 70%, 60% or 50% or so. The absolute value of ΔF in Equation 2 above may be more than or equal to, or more than any one of the above-described lower limits, or may be within a range of less than or equal to, or less than any one of the above-described upper limits while being more than or equal to, or more than any one of the above-described lower limits. The fluid may be exposed to the large heat flux, and then exposed to the small heat flux.

Depending on the purpose of the process, the process can be performed more effectively by adjusting the heat flux as described above.

In one example, the application of thermal energy to the two or more heat absorbing regions of the fluid heating device may be performed such that the fluid is exposed to the heat flux or applied thermal energy which periodically fluctuates in the internal passage along the direction of the fluid flow. Here, the periodic fluctuation of the heat flux or applied thermal energy means that the fluid is exposed to a trend, in which the heat flux or applied thermal energy increases and then decreases, 2 times or more. That is, when one cycle is defined from the time point that the heat flux or applied thermal energy starts to increase to the time point that the heat flux or applied thermal energy decreases and then starts to increase again, the fluid may be exposed to the one cycle 2 times or more while moving along the flow direction.

The lower limit of the number of times that the fluid is exposed to the one cycle may be 2 times, 3 times, 4 times, 5 times or 6 times or so, and the upper limit thereof may be 100 times, 95 times, 90 times, 85 times, 80 times, 75 times, 70 times, 65 times, 60 times, 55 times, 50 times, 45 times, 40 times, 35 times, 30 times, 25 times, 20 times, 15 times, 10 times, 9 times, 8 times, 7 times or 6 times or so. The number of times may be more than or equal to, or more than any one of the above-described lower limits, or may be within a range of less than or equal to, or less than any one of the above-described upper limits while being more than or equal to, or more than any one of the above-described lower limits.

In the periodic fluctuation, the lower limit of the deviation between the maximum value and the minimum value of the heat flux or thermal energy in one cycle (i.e., from the time point that the heat flux or thermal energy starts to increase to the time point that the heat flux or thermal energy increases and then decreases, and then starts to increase again) may be 1%, 1.5%, 2%, 5%, 25%, 50%, 75%, 100%, 150%, 200%, 250%, 300%, 350%, 400%, 450%, 500%, 550%, 600%, 650%, 700% or 750% or so, and the upper limit thereof may be 10,000%, 5,000%, 4,500%, 4,000%, 3,500%, 3,000%, 2,500%, 2,000%, 1,500%, 1,000%, 950%, 900%, 850%, 800%, 750%, 700%, 650%, 600%, 550%, 500%, 450%, 400%, 350%, 300%, 250%, 200%, 150%, 100%, 90%, 80%, 70%, 60%, 50%, 40%, 30%, 20%, 10%, 9%, 8%, 7%, 6%, 5%, 4% or 3% or so. The deviation may be more than or equal to, or more than any one of the above-described lower limits, or may be within a range of less than or equal to, or less than any one of the above-described upper limits while being more than or equal to, or more than any one of the above-described lower limits. When the largest heat flux or thermal energy value in the one cycle is set to A and the smallest heat flux or thermal energy value in the one cycle is set to B, the deviation is a value calculated as $100 \times (A-B)B$.

In the periodic fluctuation, the ratio of the length of one cycle (i.e., from the time point that the heat flux or thermal energy starts to increase to the time point that the heat flux or thermal energy increases and then decreases, and then starts to increase again) to the total length of the pipeline or the length of the pipeline through which the fluid moves may be adjusted. For example, the lower limit of the ratio may be 1%, 2%, 3%, 4%, 5%, 6%, 7%, 8%, 9%, 10%, 15%, 20%, 25% or 30% or so, and the upper limit thereof may be 200%, 195%, 190%, 185%, 180%, 175%, 170%, 165%, 160%, 155%, 150%, 145%, 140%, 135%, 130%, 125%, 120%, 115%, 110%, 105%, 100%, 95%, 90%, 85%, 80%, 75%, 70%, 65%, 60%, 55%, 50%, 45%, 40%, 35%, 30%, 25%, 20%, 15% or 10% or so. The ratio may be more than or equal to, or more than any one of the above-described lower limits, or may be within a range of less than or equal to, or less than any one of the above-described upper limits while being more than or equal to, or more than any one of the above-described lower limits. When the total length of the pipeline through which the fluid moves in the fluid heating device is set to L and the length of the one cycle is set to L1, the ratio is a value calculated by $100 \times L1/L$.

The method of generating such periodic fluctuations or fluctuations of the heat flux or applied thermal energy in the pipeline is not particularly limited. For example, the periodic fluctuation or the fluctuation of the heat flux or applied thermal energy can be secured through adjustment of the type of heat generating units present in the fluid heating device, the magnitude of heat applied to each unit and/or the interval between the units, and the like.

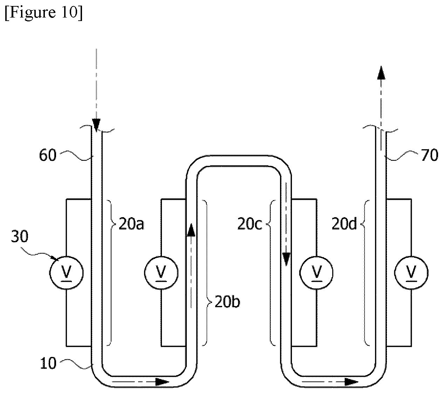

In order to confirm the effect of the fluid heating device of the present application, a fluid heating device (1) comprising a pipeline (10) as shown in Figure 10 was prepared (Example 1). The pipeline (10) of Figure 10 was divided into a total of four heat absorbing regions (20a, 20b, 20c and 20d), and direct-current power-supply devices (30) capable of adjusting the amount of current were electrically connected to the surface (110) of the pipeline (10) corresponding to the respective heat absorbing regions (20a, 20b, 20c and 20d). As a fluid of a pyrolytic target, a fluid comprising liquefied petroleum gas (LGP) containing compounds with 3 or less carbon atoms, and steam was used, which was introduced into the fluid heating device (1) through the inlet (60) of the pipeline (10) of Figure 10.

The magnitude of the electric energy applied from the direct-current power source (30) was adjusted so that the thermal energy of about 6,700 cal/sec was applied to the heat absorbing region 20a among the four heat absorbing regions; the thermal energy of about 2,800 cal/sec was applied to the heat absorbing region 20b; the thermal energy of about 1,600 cal/sec was applied to the heat absorbing region 20c; and the thermal energy of about 2,700 cal/sec was applied to the heat absorbing region 20d. The thermal energy applied to each heat absorbing region was different from each other by adjusting the current with the direct-current power-supply devices (30) electrically connected to the surface (110) of the pipeline (10).

As a comparison target (Comparative Example 1), a fluid heating device comprising the pipeline (10) of the type shown in Figure 7 was used as described above. However, in the device of the comparison target, the electrical heat generation unit was not applied thereto, and a unit for applying heat by firepower generated by burning a fuel was applied in the same manner as the conventional technology. In such a form, the thermal energy cannot be individually applied to the respective heat absorbing regions, the pyrolysis proceeds as in a high-temperature cracking furnace having a fixed heat distribution aspect.

All other conditions of Example 1 and Comparative Example 1 were the same, except for the difference in the heat generating unit.

In Example 1 and Comparative Example 1, the flow rates of ethylene and propylene were measured for the reactants discharged from the outlet (70) of the pipeline (10), and the results were shown in Table 1 below. In addition, the coke precursor fractions, and the temperatures of the reactants at the outlet (70) were measured for the reactants coming out of the outlet (70), and the results were shown in Table 1 below. The coke precursor fraction was calculated as a value of the flow rate of the aromatic compound compared to the flow rate of the reactants coming out of the outlet (70). Here, the aromatic compound means an organic compound having a benzene ring and/or a condensed ring of a benzene ring in the molecule.

[Table 1]

| | Ethylene flow rate (kg/h) | Propylene flow rate (kg/h) | Total olefin flow rate (kg/h) | Coke precursor fraction | COT (coil outlet temperature (°C)) |
|---|---|---|---|---|---|
| Example 1 | 1004 | 655 | 1659 | 0.02 | 812 |
| Comparative Example 1 | 1012 | 450 | 1462 | 0.06 | 838 |

From Table 1, it could be known that the total olefin flow rate in Example 1 was improved by about 13.5% or so compared to the total olefin flow rate in Comparative Example 1. As such, in the case of Example 1, the heat could be distributed in different forms to several heat absorbing regions, so that the desired reactant showed a flow rate higher than that of Comparative Example 1.

From Table 1, it could be known that the coke precursor fraction of Example 1 was confirmed to be lower than that of Comparative Example 1. That is, it could be known that the reactant of Comparative Example 1 included the aromatic compound in a higher amount compared to the reactant of Example 1.

Referring to Table 1, it can be confirmed that the COT (that is, the temperature of the fluid at the outlet (70) as the temperature of the reactant) in Comparative Example 1 is higher compared to Example 1. As such, Example 1 has a lower COT than Comparative Example 1, it can be known that the generation of coke is reduced and the thermal energy is used more efficiently.

A further experiment (Example 2) was performed. In Example 2, a fluid heating device comprising a U-shaped pipeline with a total length of about 27m or so was used. The pipeline was divided into several heat absorbing regions at appropriate locations, and direct-current power-supply devices capable of adjusting the amount of current were electrically connected to the surface of the pipeline corresponding to the respective heat absorbing regions. As the fluid of the pyrolytic target, one comprising naphtha and steam was used, and the fluid was introduced into the fluid heating device through the inlet of the pipeline.

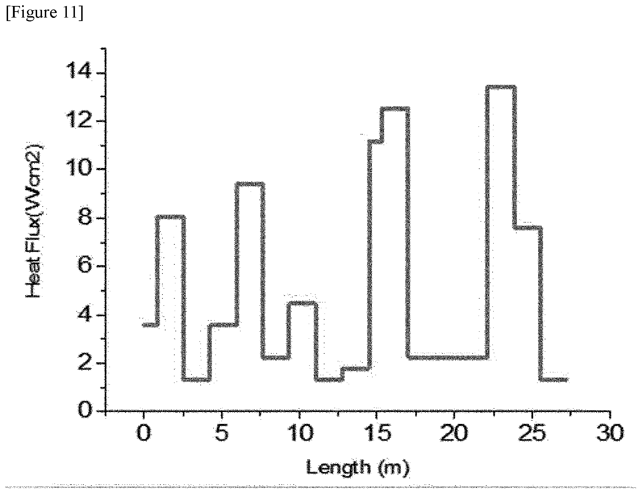

Figure 11 is a distribution of thermal energy (i.e., heat flux) according to the length of the pipeline in Example 2. Such a distribution was achieved by regulating the amount of current with the electrically connected direct-current power-supply device.

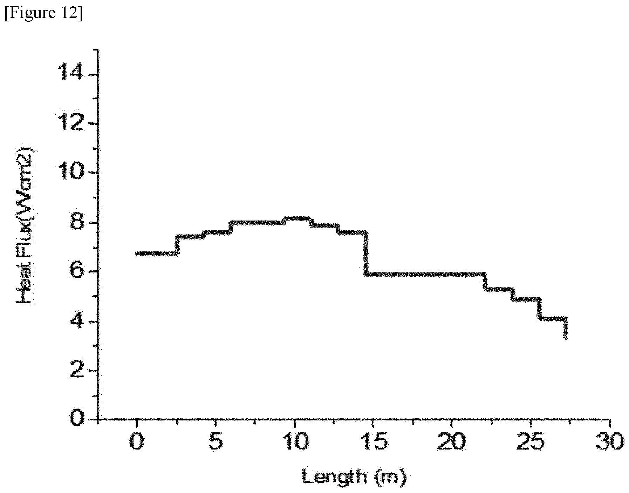

As a control group (Comparative Example 2), one comprising the same U-shaped pipeline as in Example 2, provided that a unit generating thermal energy in the same form as in Comparative Example 1 was used, was applied. In this case, it is a case where the thermal energy cannot apply individually to the respective heat absorbing regions and the pyrolysis is performed in a high-temperature cracking furnace having a fixed heat distribution aspect. Figure 12 is a distribution of thermal energy (i.e., heat flux) in Comparative Example 2.

All other conditions of Example 2 and Comparative Example 2 are the same, except that the distribution of thermal energy is adjusted as above through change of the type of heat generating units.

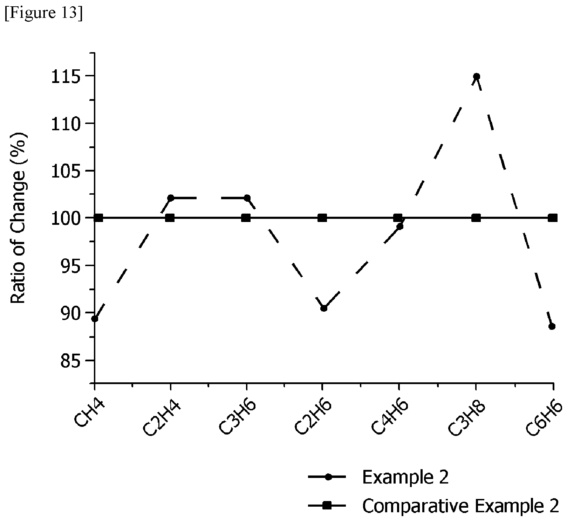

In Example 2 and Comparative Example 2, the content ratios of methane ($CH_4$), ethylene ($C_2H_4$), propylene ($C_3H_6$), ethane ($C_2H_6$), butylene ($C_4H_8$), propane ($C_3H_8$) and benzene ($C_6H_6$) were measured for the reactants coming out of the outlet of the pipeline, and the results were shown in Figure 13. In Figure 13, when the amounts of methane ($CH_4$), ethylene ($C_2H_4$), propylene ($C_3H_6$), ethane ($C_2H_6$), butylene ($C_4H_8$), propane ($C_3H_8$) and benzene ($C_6H_6$) measured in Comparative Example 2 have each set to 100%, the amounts of methane ($CH_4$), ethylene ($C_2H_4$), propylene ($C_3H_6$), ethane ($C_2H_6$), butylene ($C_4H_8$), propane ($C_3H_8$) and benzene ($C_6H_6$) measured in Example 2 are compared.

In Figure 13, the contents of Example 2 are indicated by a dotted line, and the contents of Comparative Example 2 are indicated by a solid line. In the respective contents, for the reactants coming out of the outlet of the fluid heating device, when the content ratios of all the compounds measured in Comparative Example 2 have set to 100%, the content ratios of all the compounds measured in Example 2 are shown.

Referring to Figure 13, it can be known that the content ratios of ethylene ($C_2H_4$) and propylene ($C_3H_6$), which are target compounds in the cracking process, in Example 2 are improved compared to Comparative Example 2, and it can be known that the content ratios of methane ($CH_4$), ethane ($C_2H_6$) and benzene ($C_6H_6$), which are not the target compounds, in Example 2 are reduced compared to Comparative Example 2. The content ratios described in Figure 13 are weight ratios. The content ratios of the compounds included in the reactants were calculated as the values of the flow rates for the respective compounds relative to the flow rate of the reactants.

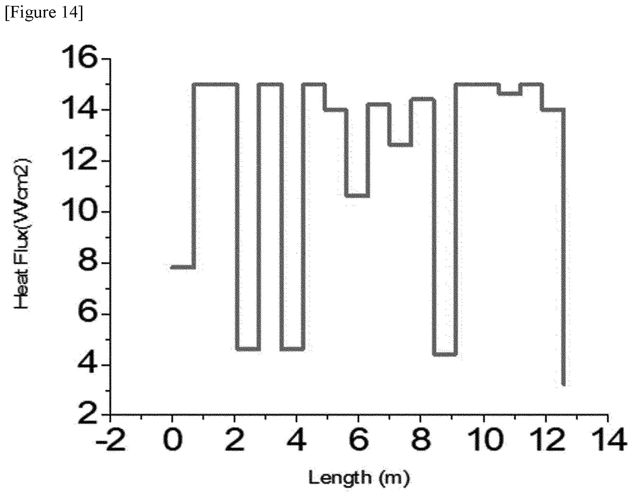

A further experiment (Example 3) was performed. In Example 3, a fluid heating device comprising a linear shape pipeline with a total length of about 13m or so was used. The pipeline was divided into several heat absorbing regions at appropriate locations, and direct-current power-supply devices capable of adjusting the amount of current were electrically connected to the surface of the pipeline corresponding to the respective heat absorbing regions. As the fluid of the pyrolytic target, one comprising naphtha and steam was used, and the fluid was introduced into the fluid heating device through the inlet of the pipeline. Figure 14 is a distribution of thermal energy (i.e., heat flux) according to the length of the pipeline. Such a distribution was achieved by regulating the amount of current with the electrically connected direct-current power-supply device.

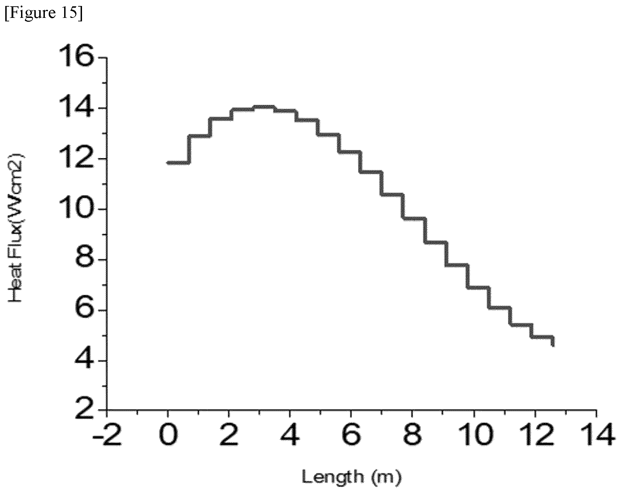

As a control group (Comparative Example 3), one comprising the same linear shape pipeline as in Example 3, provided that a unit generating thermal energy in the same form as in Comparative Example 1 was used, was applied. In this case, it is a case where the thermal energy cannot apply individually to the respective heat absorbing regions and the pyrolysis is performed in a high-temperature cracking furnace having a fixed heat distribution aspect. Figure 15 is a distribution of thermal energy (i.e., heat flux) in Comparative Example 3.

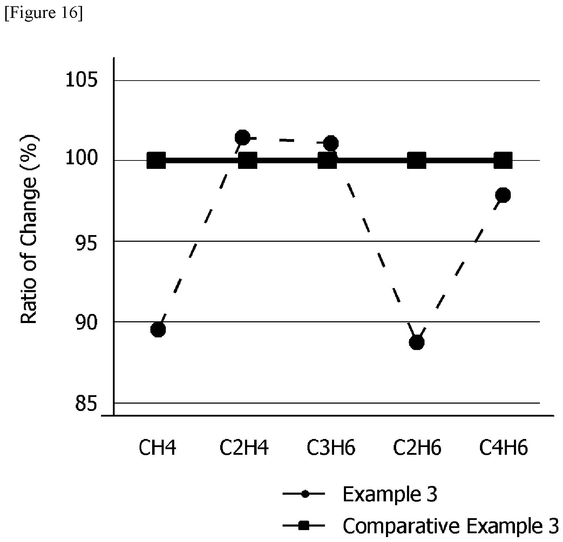

In Example 3 and Comparative Example 3, the content ratios of methane ($CH_4$), ethylene ($C_2H_4$), propylene ($C_3H_6$), ethane ($C_2H_6$) and butyne ($C_4H_6$) were measured for the reactants coming out of the outlet of the pipeline, and the results were shown in Figure 16. In Figure 16, when the amounts of methane ($CH_4$), ethylene ($C_2H_4$), propylene ($C_3H_6$), ethane ($C_2H_6$) and butyne ($C_4H_6$) measured in Comparative Example 3 have each set to 100%, the amounts of methane ($CH_4$), ethylene ($C_2H_4$), propylene ($C_3H_6$), ethane ($C_2H_6$) and butyne ($C_4H_6$) measured in Example 3 are compared.

In Figure 16, the results of Example 3 are indicated by a dotted line, and the results of Comparative Example 3 are indicated by a solid line. In the results of Figure 16, for the reactants coming out of the outlet of the fluid heating device, when the content ratios of all the compounds measured in Comparative Example 3 have set to 100%, the content ratios of all the compounds measured in Example 3 are shown.

Referring to Figure 16, it can be known that the content ratios of ethylene ($C_2H_4$) and propylene ($C_3H_6$), which are target compounds in the cracking process, in Example 3 are improved compared to Comparative Example 3, and it can be known that the content ratios of methane ($CH_4$) and ethane ($C_2H_6$), which are not the target compounds, in Example 3 are significantly reduced compared to Comparative Example 3. In the contents in Figure 16, the content ratios are weight ratios. The content ratios of the compounds included in the reactants were measured as the values of the flow rates for the respective compounds relative to the flow rate of the reactants.

From the above results, it can be confirmed that the fluid heating device according to one example of the present application controlling the inflow heat fluxes themselves, respectively, in accordance with the progress degree of the pyrolysis in consideration of the physical and/or chemical characteristics of the pyrolysis target can improve the yield of the target compound in the cracking process, reduce the production amount of compounds (methane, ethane, benzene, fuel oil, etc.) other than the target compounds, and reduce a phenomenon that coke is generated.

[Explanation of Reference Numerals]

10: pipeline

40: external heat source

20a, 20b, 20c, 20d: heat absorbing region

50: coil wire

30: power-supply device

**Claims**

1. A fluid heating device, comprising:

   a pipeline having an internal passage configured to allow fluid to flow,
   wherein the internal passage is divided into two or more heat absorbing regions, and
   wherein the two or more heat absorbing regions are each independently configured to receive thermal energy.

2. The fluid heating device of claim 1, wherein the thermal energy is generated in different heat generating units.

3. The fluid heating device of claim 2, wherein at least one of the heat generating units is a heat generating unit configured to convert electrical energy into thermal energy.

4. The fluid heating device of claim 3, wherein at least one of the heat generating units is a pipeline configured to generate resistance heat by energization.

5. The fluid heating device of claim 3, wherein at least one of the heat generating units is a unit provided while being spaced apart from the pipeline and configured to convert electrical energy into thermal energy.

6. The fluid heating device of claim 3, wherein at least one of the heat generating units is a pipeline configured to generate resistance heat by an induced current.

7. The fluid heating device of claim 1, wherein the two or more heat absorbing regions are arranged so that the fluid is exposed to the two or more heat absorbing regions where an absolute value of a deviation ΔH of applied thermal energy according to Equation 1 is 10% or more:

$$[\text{Equation 1}]$$

$$\Delta H = 100\% \times (H1 - H2)/H2$$

wherein, H1 is thermal energy applied to any one of the two or more heat absorbing regions, and H2 is thermal energy applied to the heat absorbing region different from the heat absorbing region to which the thermal energy of H1 is applied.

8. The fluid heating device of claim 7, wherein the two or more heat absorbing regions are arranged such that the thermal energy applied along a direction of fluid flow decreases and then increases, or increases and then decreases.

9. The fluid heating device of claim 1, wherein the two or more heat absorbing regions are arranged such that periodic fluctuations in a heat flux or applied thermal energy in the internal passage occur along a direction of fluid flow.

10. The fluid heating device of claim 9, wherein an absolute value of a deviation between a maximum heat flux or applied thermal energy and a minimum heat flux or applied thermal energy in one cycle of periodic fluctuations is 10% or more.

11. The fluid heating device of claim 10, wherein the two or more heat absorbing regions are arranged such that the fluid is exposed to periodic fluctuations of the heat flux or applied thermal energy comprising two or more cycles.

12. The fluid heating device of claim 10, wherein the two or more heat absorbing regions are arranged such that a ratio of a length of one cycle of periodic fluctuations of the heat flux or applied thermal energy relative to a length of the pipeline through which the fluid flows ranges from 1% to 200%.

13. A method for producing a product using the fluid heating device of claim 1, comprising
independently applying thermal energy to the two or more heat absorbing regions of the fluid heating device while moving the fluid into the internal passage of the pipeline of the fluid heating device.

14. The method of claim 13, wherein the thermal energy applied to each of the two or more heat absorbing regions is generated by different heat generating units, and at least one heat generating unit among the heat generating units is a unit that converts electrical energy into thermal energy.

15. The method of claim 13, wherein the thermal energy is applied such that the fluid flows through the two or more heat absorbing regions where an absolute value of a deviation $\Delta H$ of the applied thermal energy according to Equation 1 is 10% or more:

[Equation 1]

$$\Delta H = 100\% \times (H1 - H2)/H2$$

wherein, H1 is thermal energy applied to any one of the two or more heat absorbing regions, and H2 is thermal energy applied to the heat absorbing region different from the heat absorbing region to which the thermal energy of H1 is applied.

16. The method of claim 15, wherein the thermal energy is applied to the two or more heat absorbing regions so that the thermal energy applied along a direction of fluid flow decreases and then increases, or increases and then decreases.

17. The method of claim 13, wherein the thermal energy is applied to the two or more heat absorbing regions so that the fluid is exposed to periodic fluctuations of heat flux or applied thermal energy in the internal passage along a direction of fluid flow.

18. The method of claim 17, wherein the thermal energy is applied to the two or more heat absorbing regions so that an absolute value of a deviation between a maximum heat flux or applied thermal energy and a minimum heat flux or applied thermal energy in one cycle of periodic fluctuations is 10% or more.

19. The method of claim 17, wherein the thermal energy is applied to the two or more heat absorbing regions so that the fluid is exposed to periodic fluctuations of heat flux or applied thermal energy comprising two or more cycles.

20. The method of claim 17, wherein the thermal energy is applied to the two or more heat absorbing regions so that a ratio of a length of one cycle of periodic fluctuations of the heat flux or applied thermal energy relative to a length of the pipeline through which the fluid flows ranges from 1% to 200%.

[Figure 1]

[Figure 2]

[Figure 3]

[Figure 4]

[Figure 5]

[Figure 6]

[Figure 7]

[Figure 8]

[Figure 9]

[Figure 10]

[Figure 11]

[Figure 12]

[Figure 13]

[Figure 14]

[Figure 15]

[Figure 16]

<div align="center">

**INTERNATIONAL SEARCH REPORT**

</div>

| | International application No. |
|---|---|
| | **PCT/KR2023/002541** |

| | |
|---|---|
| **A.** | **CLASSIFICATION OF SUBJECT MATTER** |
| | **C10G 9/24**(2006.01)i; **C10G 9/16**(2006.01)i |

According to International Patent Classification (IPC) or to both national classification and IPC

| | |
|---|---|
| **B.** | **FIELDS SEARCHED** |

Minimum documentation searched (classification system followed by classification symbols)

C10G 9/24(2006.01); B01J 19/00(2006.01); C10G 9/16(2006.01); C10G 9/18(2006.01); C10G 9/20(2006.01); C10G 9/36(2006.01); F27D 11/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 열분해(pyrolysis), 분해로(furnace), 히터(heater), 파이프(pipe), 유도가열 (induction heating)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | JP 05-222379 A (INST FRANCAIS DU PETROLE) 31 August 1993 (1993-08-31)<br>See claim 2; paragraphs [0016]-[0039], [0062] and [0080]; and figures 1-7. | 1-20 |
| Y | JP 10-053775 A (NAPHTACHIMIE SA) 24 February 1998 (1998-02-24)<br>See paragraph [0040]; and figure 1. | 1-20 |
| Y | JP 2003-504485 A (NAPHTACHIMIE SA et al.) 04 February 2003 (2003-02-04)<br>See claim 9; and paragraphs [0024]-[0025]. | 6 |
| A | JP 2004-536907 A (ABB LUMMUS GLOBAL INC.) 09 December 2004 (2004-12-09)<br>See claims 1-3; and figures 1-5. | 1-20 |
| DA | JP 2016-150968 A (MITSUBISHI CHEMICALS CORP et al.) 22 August 2016 (2016-08-22)<br>See entire document. | 1-20 |

| ☐ Further documents are listed in the continuation of Box C. | ☑ See patent family annex. |
|---|---|

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 June 2023** | **09 June 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| JP | 05-222379 | A | 31 August 1993 | EP | 0542597 | A1 | 19 May 1993 |
| | | | | EP | 0542597 | B1 | 28 February 1996 |
| | | | | JP | 3151641 | B2 | 03 April 2001 |
| | | | | US | 5321191 | A | 14 June 1994 |
| JP | 10-053775 | A | 24 February 1998 | EP | 0803287 | A1 | 29 October 1997 |
| | | | | US | 5873408 | A | 23 February 1999 |
| JP | 2003-504485 | A | 04 February 2003 | CN | 1358222 | A | 10 July 2002 |
| | | | | EP | 1192236 | A1 | 03 April 2002 |
| | | | | EP | 1192236 | B1 | 02 April 2003 |
| | | | | JP | 4585729 | B2 | 24 November 2010 |
| | | | | US | 2006-0116543 | A1 | 01 June 2006 |
| | | | | US | 7288690 | B2 | 30 October 2007 |
| | | | | WO | 01-04236 | A1 | 18 January 2001 |
| JP | 2004-536907 | A | 09 December 2004 | CN | 1514869 | A | 21 July 2004 |
| | | | | EP | 1397466 | A1 | 17 March 2004 |
| | | | | EP | 1397466 | B1 | 03 May 2006 |
| | | | | JP | 3826361 | B2 | 27 September 2006 |
| | | | | KR | 10-0563761 | B1 | 24 March 2006 |
| | | | | KR | 10-2004-0012920 | A | 11 February 2004 |
| | | | | US | 6425757 | B1 | 30 July 2002 |
| | | | | WO | 02-100982 | A1 | 19 December 2002 |
| JP | 2016-150968 | A | 22 August 2016 | None | | | |

Form PCT/ISA/210 (patent family annex) (July 2022)

**REFERENCES CITED IN THE DESCRIPTION**

**Patent documents cited in the description**

- KR 2023002541 W
- KR 1020220023601
- JP 2016150968 A